# EUROPEAN PATENT SPECIFICATION

(11) **EP 2 330 530 B1**
(45) Date of publication and mention of the grant of the patent: **03.04.2013**
(21) Application number: 10182649.3
(22) Date of filing: 21.12.2005
(51) Int. Cl.: G06F 21/00

(54) **Memory system with in-stream data encryption/decryption**
Speichersystem mit In-Stream-Datenverschlüsselung/-Entschlüsselung
Système de mémoire doté de cryptage/décryptage de données en flux

(30) Priority: 21.12.2004 US 639442 P; 20.12.2005 US 314030; 20.12.2005 US 314032
(43) Date of publication of application: 08.06.2011
(62) Divisional of application: 05855187.0
(73) Proprietor: SanDisk Technologies Inc., Plano, Texas 75024 (US); Discretix Technologies Ltd., 42502 Netanya (IL)
(72) Inventor: Holtzman, Michael, Cupertino, CA 95014 (US); Cohen, Baruch, 21721, Carmiel (IL); Deitcher, David, Jerusalem (IL); Bar-El, Hagei, 76574, Rehovot (IL); Yeruchami, Aviram, Kfar Saba (IL)
(74) Representative: Prock, Thomas

(56) References cited:
- EP-A- 1 074 906
- US-A- 6 158 004
- US-A1- 2002 174 337

## Description

This invention relates in general to memory systems, and in particular to a memory system with in stream data encryption/decryption.

The mobile device market is developing in the direction of including content storage so as to increase the average revenue by generating more data exchanges. This means that the content has to be protected when stored on a mobile device.

Portable storage devices are in commercial use for many years. They carry data from one computing device to another or to store back-up data. More sophisticated portable storage devices, such as portable hard disc drives, portable flash memory disks and flash memory cards, include a microprocessor for controlling the storage management.

In order to protect the contents stored in the portable storage devices, the data stored is typically encrypted and only authorized users are allowed to decrypt the data

In portable storage devices with cryptographic capability that had been proposed, the microprocessor for storage management is also involved intimately in the encryption and decryption processes. Such a system is described, for example, in U.S. Patent 6,457,126. When this is the case, the throughput and performance of the storage device can be seriously affected. It is therefore desirable to provide an improved local storage device where such difficulties are alleviated.

EP 1074906 discloses a card shaped semiconductor storage device in which a CPU runs a program including operating a scramble key generating unit and non-public command system for management for the purpose of security.

According to an aspect of the present invention there is provided a method for encrypting and/or decrypting data in non-volatile memory in a storage device having a controller and a cryptographic circuit. The method comprises the cryptographic circuit performing receiving information from the controller used to configure the cryptographic circuit for performing cryptographic processes on data in a data stream from or to the non-volatile memory in the storage device using one or more cryptographic algorithms selected from a plurality of algorithms and cryptographically processing the data in the data stream independent of involvement of the controller according the algorithms to be employed after the cryptographic circuit is configured. The information is information on the cryptographic algorithm and key to be employed in cryptographically processing the data.

According to another aspect of the present invention there is provided a storage device comprising non-volatile memory, a controller and a cryptographic circuit configured to: receive information from the controller used to configure the cryptographic circuit for performing cryptographic processes on data in a data stream from or to the non-volatile memory in the storage device using one or more cryptographic algorithms selected from a plurality of algorithms and cryptographically process the data in the data stream independent of involvement of the controller according the algorithms to be employed after the cryptographic circuit is configured. The information is information on the cryptographic algorithm and key to be employed in cryptographically processing the data.

It has been recognised that the throughput of the memory system can be improved where data in the data stream is cryptographically processed by a circuit without involving intimately any controller or microprocessor when data in the data stream is sent to or fetched from non-volatile memory cells. The controller is only involved in setting the parameters used in the cryptographic process(es) but not in the processes. In one implementation of this embodiment, the parameters are set by means of a configuration register.

The memory cells preferably comprise flash memory cells. Also preferably, the memory cells, the circuit used for encrypting and/or decrypting data and a controller controlling the cells and the circuit are placed within and encapsulated in a physical body such as a memory card or stick.

Data may be written to or read from the memory cells in pages. In many conventional cryptographic algorithms used for encryption and decryption operates on units of data typically smaller than the page. The cryptographic circuit may cryptographically process one or more pages of data in the data stream being read or written, and the data stream may be controlled so that it has a selected data source among a plurality of sources and a selected destination among a plurality of destinations, all without involving the controller.

The cryptographic circuit is configured to enable the selection of one or more cryptographic algorithms among a plurality of algorithms to encryption and/or decryption without involving a controller or microprocessor. The circuit may also be configured so that the circuit processes data in the data stream cryptographically in multiple successive stages without involvement of the controller after the configuring. The cryptographic processes in multiple successive stages may employ more than one key and may use more than one type of cryptographic processes without involvement of the controller after the configuring.

For certain applications, it may be desirable for the memory system to handle more than one data stream. In such event, the controller controls the memory cells and the circuit so that data in different data streams are processed cryptographically in an interleaved manner. Preferably the various parameters for cryptographic processing each data stream are stored when processing of the data stream is interrupted during the interleaving, so that when processing of such data stream is resumed, the parameters can be restored to continue the cryptographic processing. In one implementation of this feature, a security configuration record is created at the start of write operations to set the various parameters for cryptographic processing and these parameters are stored at the end of the session. This record is then retrieved from memory when a read operation starts, and discarded at the end of the operation. Such record is also stored when the data stream is temporarily interrupted to allow processing of another data stream, and retrieved when the processing of the original data stream is resumed.

The above described aspects of the invention may be used individually or in any combination thereof.

Fig. 1 is a block diagram of a memory system in communication with a host device to illustrate the invention.

Fig. 2 is a block diagram of some aspects of the cryptographic engine of Fig. 1.

Fig. 3 is a flow chart illustrating the operation of the system in Fig. 1 to illustrate the preferred embodiment of one aspect of the invention.

Fig. 4 is a flow chart useful for illustrating the operation of the system of Fig. 1 in handling multiple data streams and the utilization of security configuration records.

For convenience in Description, identical components are labeled by the same numbers in this application.

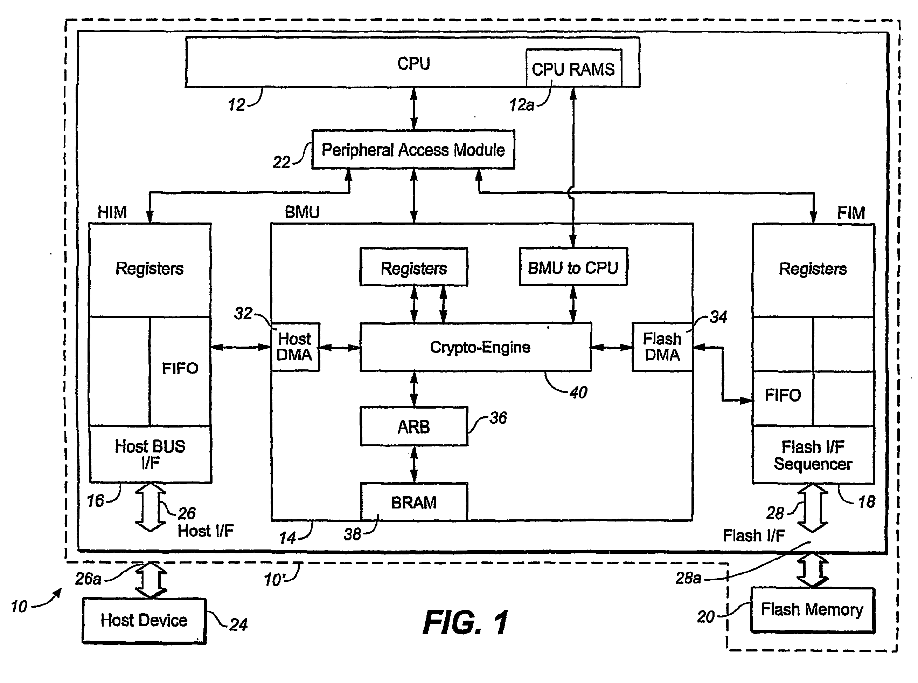

An example memory system in which the various aspects of the present invention may be implemented is illustrated by the block diagram of Fig. 1. As shown in Fig. 1, the memory system 10 includes a central processing unit (CPU) 12, a buffer management unit (BMU) 14, a host interface module (HIM) 16 and a flash interface module (FIM) 18, a flash memory 20 and a peripheral access module (PAM) 22. Memory system 10 communicates with a host device 24 through a host interface bus 26 and port 26a. The flash memory 20 which may be of the NAND type, provides data storage for the host device 24. The software code for CPU 12 may also be stored in flash memory 20. FIM 18 connects to the flash memory 20 through a flash interface bus 28 and port 28a. HIM 16 is suitable for connection to a host system like a digital camera, personal computer, personal digital assistant (PDA), digital media player, MP-3 player, and cellular telephone or other digital devices. The peripheral access module 22 selects the appropriate controller module such as FIM, HIM and BMU for communication with the CPU 12. In one embodiment, all of the components of system 10 within the dotted line box may be enclosed in a single unit such as in memory card or stick 10' and preferably encapsulated in the card or stick.

The buffer management unit 14 includes a host direct memory access (EDMA) 32, a flash direct memory access (FDMA) controller 34, an arbiter 36, a buffer random access memory (BRAM) 38 and a crypto-engine 40. The arbiter 36 is a shared bus arbiter so that only one master or initiator (which can be HDMA 32, FDMA 34 or CPU 12) can be active at any time and the slave or target is BRAM 38. The arbiter is responsible for channeling the appropriate initiator request to the BRAM 38. The HDMA 32 and FDMA 34 are responsible for data transported between the HIM 16, FIM 18 and BRAM 38 or the CPU random access memory (CPU RAM)12a. The operation of the HDMA 32 and of the FDMA 34 is conventional and need not be described in detail herein. The BRAM 38 is used to buffer data passed between the host device 24, flash memory 20 and CPU RAM 12a. The HDMA 32 and FDMA 34 are responsible for transferring the data between HIM 16/FIM 18 and BRAM 38 or the CPU RAM 12a and for indicating sector transfer completion..

First when data from flash memory 20 is read by the host device 24, encrypted data in memory 20 is fetched through bus 28, FIM 18, FDMA 34, crypto engine 40 where the encrypted data is decrypted and stored in BRAM 38. The decrypted data is then sent from BRAM 38, through HDMA 32, HIM 16, bus 26 to the host device 24. The data fetched from BRAM 38 may again be encrypted by means of crypto engine 40 before it is passed to HDMA 32 so that the data sent to the host device 24 is again encrypted but by means of a different key and/or algorithm compared to the those whereby the data stored in memory 20 is decrypted. Preferably, and in an alternative embodiment, rather than storing decrypted data in BRAM 38 in the above-described process, which data may become vulnerable to unauthorized access, the data from memory 20 may be decrypted and encrypted again by crypto engine 40 before it is sent to BRAM 38. The encrypted data in BRAM 38 is then sent to host device 24 as before. This illustrates the data stream during a reading process.

When data is written by host device 24 to memory 20, the direction of the data stream is reversed. For example if unencrypted data is sent by host device, through bus 26, HIM 16, HDMA 32 to the crypto engine 40, such data may be encrypted by engine 40 before it is stored in BRAM 38. Alternatively, unencrypted data may be stored in BRAM 38. The data is then encrypted before it is sent to FDMA 34 on its way to memory 20. Where the data written undergoes multistage cryptographic processing, preferably engine 40 completes such processing before the processed data is stored in BRAM 38.

One aspect of the invention is based on the recognition that the throughput and hence the performance of device 10 can be much improved if the above-described cryptographic processing of data in the data stream passing between the host device 24 and memory 20 can be performed with minimal involvement of CPU 12. This is illustrated in Fig. 1 as explained below.

In the process described above, data streams having two different data sources and destinations have been described. In the reading process, the data source is memory 20 and the destination is host device 24. In the writing process, the data source is host device 24 and the destination is memory 20. In addition, the data source (or destination) can also be CPU 12 where the corresponding destination (or data source) is the memory 20. In yet another operation, the data stream can be from the BMU 14 to the CPU 12 for bulk encryption and hash operations. The various combinations of data in sources and data out destinations and the corresponding cryptographic processes that may be applied are set forth in the table below.

| **Operation** | **Engine** | **Data In Source** | **Data Out Destination** | **Description** |
|---|---|---|---|---|
| FDMA write to CPU | AES/DES/HASH | FDMA CPU BUS | CPU | This data flow enables cryptographic operations (decryption) on data loaded from the secure storage to the CPU |
| FDMA Read from CPU | AES/DES/HASH | CPU | FDMA | This data flow enables cryptographic operations (encryption) on data stored by the CPU to the secure storage. |
| FDMA Write to BRAM | AES/DES/HASH | FDMA BRAM BUS | BRAM | This data flow enables cryptographic operations on the data stream pass from the FIM to the BRAM. |
| FDMA Read from BRAM | AES/DES/HASH | BRAM | FDMA | This data flow enables cryptographic operations on the data stream pass from the BRAM to the FIM. |
| PAM ACCESS | AES/DES/HASH/ PKI | PAM | PAM | This data flow enables the CPU to access the Hardware Core for bulk encryption and hash operations. |
| BYPASS | n/a | no write | no read | This data flow enables the FDMA to access the CPU or the BRAM without any cryptographic operation on the data stream. |

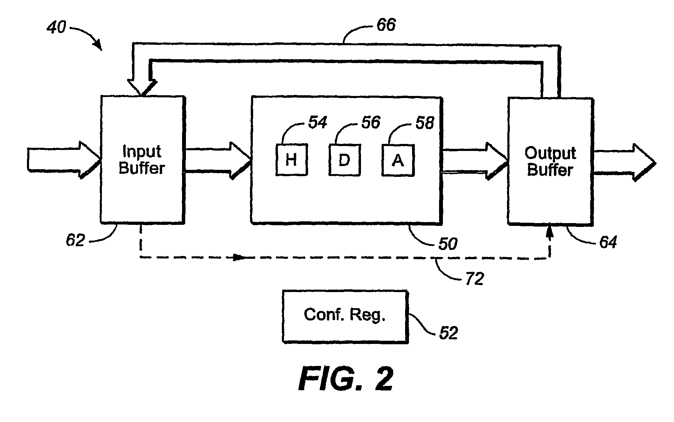

As shown in the table above, one additional operational mode is the bypass mode which enables the FDMA 34 to access the CPU 12 or the BRAM 38 along a bypass path (not shown in Fig. 1) without any cryptographic operation on the data stream, as if the Crypto-Engine 40 is not present and the HDMA and FMDA are connected directly along this bypass path to BRAM 38 through arbiter 36. According to one embodiment of the invention, processing parameters such as the data source, data destination and cryptographic parameters such as the cryptographic algorithm that is to be applied (or bypass mode) may be pre-selected by means of the CPU 12 from a plurality of data sources, a plurality of destinations and a plurality of algorithms by setting a configuration register 102 in Fig. 2 which is a block diagram of some of the functional blocks of the crypto engine 40 of Fig. 1.

Fig. 2 is a block diagram of the Crypto-Engine 40 showing in more detail some of the components thereof. As shown in Fig. 2, Crypto-Engine 40 includes a Crypto-Block 50, a configuration register 52, which stores the security configuration information or security configuration record on the selected data source, selected data destination, and the cryptographic algorithm to be employed or the bypass mode, according to the table above and key to be used (except for the bypass mode), and whether data is to be encrypted, decrypted or hashed (which are included in the phrase "cryptographically processed") or not cryptographically processed. The security configuration information or record may be written into register 52 by CPU 12. After this information has been stored in register 52, engine 40 may then perform the cryptographic process(es) accordingly without the involvement of the CPU 12. Many common cryptographic algorithms process 128 bits of data as a unit. This may be smaller than the size of pages of data that are written or read one at a time to or from storage devices such as flash memories. Each page typically stores one or more sectors of data, the size of the sector being defined by the host system. An example is a sector of 512 bytes of user data, following a standard established with magnetic disk drives, plus some number of bytes of overhead information about the user data and/or the block in which it is stored.

Logic (not shown) can be employed in block 40 so that CPU 12 need not get involved in the cryptographic processes by engine 40 so that entire pages of data are cryptographically processed in units smaller than a page at a time by engine 40. In one embodiment, Crypto-Engine 40 is a hardware circuit.

As shown in Fig. 2, blocks 54, 56 and 58 represent three different cryptographic algorithms (Hash, DES and AES respectively) that can be selected by CPU to be performed by Crypto-Block 50. Cryptographic algorithms different from such algorithms may also be used and are within the scope of the invention. The data to be processed by Crypto-Block 50 and originating from host device 24 or memory 20 or CPU 12 is first stored in input buffer 62, and then cryptographically processed by Crypto-Block 50 according to the cryptographic algorithm specified in the register 52. The cryptographically processed data is then stored in output buffer 64, before it is sent to the destination according to the destination information in register 52. Fig. 2 also includes a bypass path 72 from input buffer 62 to output buffer 64, where the data written to or read from memory 20 is not cryptographically processed, which is one of the modes in the table and one described above.

Configuration register 52 may also store the key that is to be used in the cryptographic process(es). In one embodiment, this key is retrieved by CPU 12 (such as from memory 20) and stored in register 52 prior to the encryption or decryption by Crypto-Block 50. The above described processes take place in block 40 without the involvement of CPU 12, after CPU 12 has written the pertinent information into register 52. To simplify Fig. 2, the logic that uses the information in register 52 to select the algorithm, data source and destination in block 40 and uses the unique key and selected algorithm for cryptographic processes has been omitted. It is also possible for Crypto-Block 50 to be used more than once to process the data in input buffer 62 before the processed data is sent to the output buffer 64. For example, it may be desirable to first decrypt the data from the data source and subsequently encrypt the decrypted data using a different key and/or a different algorithm before the data is sent to buffer 64. It may also be useful to apply hashing algorithm to the data to obtain a digest or hashed value(s) of the data for the purpose of ensuring data integrity, in addition to encrypting or decrypting the data. In all such situations, it is desirable to process the data twice by Crypto-Block 50, either using a key to decrypt and then a different key to encrypt, or to obtain a digest as well as encrypting or decrypting the data. Obviously, the data can also be processed for more than two times by Crypto-Block 50, such as where the data is decrypted, hashed and then encrypted which occur successively in sequential stages (multistage operation). In other words, in a multistage (i.e. with two or more stages) process, the data may be passed through Crypto-Block 50 more than once, by sending the data already processed by Crypto-Block 50 in output buffer 64 along a feed back path 66 to the input buffer 62 for more processing by Crypto-Block 50. If more than two stages are contemplated, the data can be fed back for yet additional time(s) for additional processing. In each stage of the process, a different algorithm and/or key may be used.

If a multistage process is desired, CPU 12 may be used to input security configuration information or record to register 52 to specify the number of times the data is cryptographically processed, and the key and/or algorithm to be used in each stage of the multistage process. After this information is written into register 52, CPU 12 need not be involved in the multistage process at all.

While the memory system 10 in Fig. 1 contains a flash memory, the system may alternatively contain another type of non-volatile memory instead, such as magnetic disks, optical CDs, as well as all other types of rewrite-able non volatile memory systems, and the various advantages described above will equally apply to such alternative embodiment. In the alternative embodiment, the memory is also preferably encapsulated within the same physical body (such as a memory card or stick) along with the remaining components of the memory system.

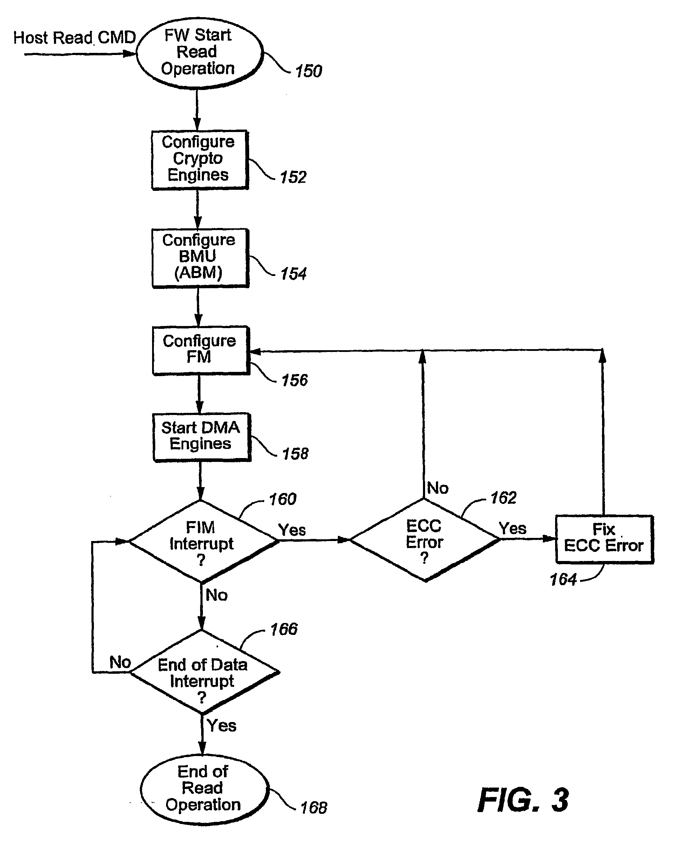

The read process for operating system 10 is illustrated by the flow chart of Fig. 3. The CPU 12 starts a read operation after receiving a read command from the host device 24 (ellipse 150). It then configures the Crypto-Engine 40 by writing appropriate security configuration information or record to register 52, and configures the BMU 14 for a reading operation, and other parameters such as the allocation of memory space in BRAM 38 for the operation (blocks 152, 154). It also configures the FIM 18, such as by specifying the locations in memory 20 where data is to be read (block 156). The HDMA and FDMA engines 32 and 34 are then started so that the above described process, including the cryptographic processes, may be performed without the involvement of the CPU (with the exception of error correction). See Block 158. When the CPU receives an interrupt, it checks to see whether it is a FIM interrupt (diamond 160). When a FIM interrupt is received, the CPU checks to see whether the interrupt is one indicating that there is one or more errors in the data stream (162). If error(s) is indicated, it proceeds to correct the error(s) (block 164) in BRAM 38 and returns to configure the FIM 18 to change the locations in memory 20 where data is to be read (block 156) next. When the FIM interrupt does not indicate error(s) in the data stream, it means that the FIM completed its operation and the CPU also returns to block 156 to re-configure the FIM. If the interrupt detected by the CPU is not a FIM interrupt, it checks to see if it is an end of data interrupt (diamond 166). If it is, then the read operation ends (ellipse 168). If not, this interrupt is irrelevant to the cryptographic processing of the data (i.e. clock interrupt) and the CPU services it (not shown) and returns to diamond 160 to check for interrupts.

Fig. 3 needs only to be modified slightly for a write operation. Since there is no handling of ECC errors in the data to be written to memory 20, the CPU 12 can skip the processes in diamond 162 and block 164 in a write operation. If a FIM interrupt is received by the CPU 12 during a write operation, this means that the FIM completed its operation and the CPU also returns to block 156 to re-configure the FIM. Aside from this difference, the write operation is substantially similar to the read operation. Thus, once the Crypto-Engine 40, BMU 14 and FIM 18 have been configured, system 10 is able to cryptographically process all of the data (except in the bypass mode), and complete the writing or reading of all of the pages for the session, without involving the CPU 12, even though the Crypto-Engine 40 may process data in much smaller units than pages.

### INTERLEAVING DATA STREAMS

It may be desirable for multiple host applications to be able to access memory 20 in parallel for processing multiple data streams. This means that the cryptographic processing of one data stream may not have been completed when it is interrupted in order for the memory system 10 to process another different data stream. The cryptographic processing of different data streams will typically employ different parameters (e.g. different keys and algorithms, and different data sources and destinations). These parameters are provided in corresponding security configuration records of the data streams. To ensure that when the interrupted processing of a particular data stream is later resumed, its corresponding security configuration record has not been lost, such record is stored, preferably in the CPU RAM 12a. Upon resumption of the processing of the previously interrupted data stream, the CPU 12 then retrieves the stored security configuration record for such data stream, so that the resumed cryptographic processing of such data stream can proceed with the correct parameters, according to the stored corresponding security configuration record.

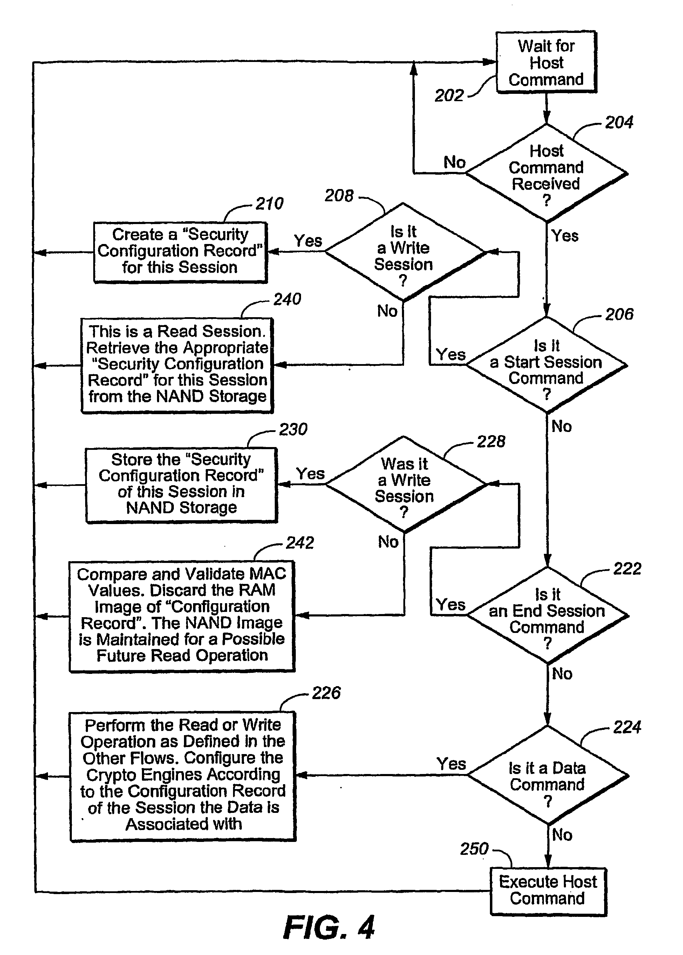

Fig. 4 is a flow chart useful for illustrating the operation of the system of Figs. 1 and 2 in handling multiple data streams and the utilization of security configuration records. The CPU checks whether a host command has been received (block 202, diamond 204). When a host command has been received, such as for cryptographically processing a first data stream, the CPU checks as to whether the command is a start session command, such as one for a first application running on device 24 (diamond 206). If it is, then the CPU checks on whether a Write Session has been requested or not (diamond 208). If a Write Session has been requested, the CPU then creates a security configuration record (e.g. selected data source, selected data destination, and the cryptographic algorithm to be employed according to the table above and key to be used, and whether data is to be encrypted, decrypted or hashed) according to information from the host device (block 210) and starts a first session for the first data stream. The CPU 12 stores such security configuration information or record in the CPU RAM 12a. If the session requested is a read session, the CPU reads from memory 20 the security configuration record for the data that is to be read (block 240) and stores it in the CPU RAM 12a. Then the CPU returns and waits for further host commands (202).

When the CPU receives another host command, it again checks to see if it is a start session command (diamond 206). If it is, then a second session can be started, by proceeding to block 210 or block 240, such as a new second session for a different second application running on host device 24 requesting cryptographically processing of a second data stream. The security configuration information or record for such second data stream is again stored in CPU RAM 12a, which is the case for both write and read sessions (blocks 210, 240). Additional sessions can be created for additional data streams in the same manner. The CPU returns to block 202, and checks the next host command to see if the host command is a start session command (diamond 206). Thus, additional sessions are created as described until the CPU 12 detects a host command that is not a start session command in diamond 206.

In such event, CPU 12 checks the next host command to see if the host command is an end of session command (diamond 222). If it is not then the CPU checks to see if it is a data command (diamond 224). Assuming that it is a data command, the CPU determines which data stream is the one to be processed, and configures the Crypto-engine 40 (by writing to register 52) according to the security configuration record for such data stream, and the Crypto-engine 40 performs the read or write operation in the manner described above (or Crypto-engine 40 is bypassed in the bypass mode), such as according to the process in Fig. 3 (block 226).

If there is no interruption in the reading or writing process, the process will continue until the CPU receives an end session command (block 222), which means all of the pages to be processed during the session has been processed. However, if there is interruption, the CPU will receive a host data command to process data from a data stream which is different from the one system 10 is currently processing. In such event, Crypto-engine 40 will need to be re-configured to process such different data stream. The CPU then retrieves from the CPU RAM 12a the-security configuration record for such different data stream, re-configures the Crypto-engine 40 (by writing the retrieved record to register 52), so that the engine 40 will correctly process the different data stream.

When an end session command (block 222) is received, in a write session, the CPU stores in memory 20 the security configuration record along with the data written, so that the record can be retrieved in subsequent red operations (diamond 228, block 230). For read operations, the security configuration record stored in RAM 12a is discarded, but the record stored in memory 20 is maintained for possible future read operations (block 242).

For certain applications, it may be important to maintain integrity of data in memory 20 against tempering. To ensure that data stored in memory 20 has not been altered or otherwise corrupted, it is desirable to derive from the data hashed value(s) or digest of the data which value(s) or digest is stored together with the data. When the data is read, the digest or hashed value(s) is read as well, so that the read hashed value(s) or digest can be compared to the digest or hashed value(s) computed from the data that has been read. If there is a difference between them, then the data in memory 20 may have been altered or otherwise corrupted.

One common hash function is the chained block cipher (CBC), where message authentication codes (MAC) are derived in a time sequence from the blocks of data that is being written or read. One common CBC function is set forth below:
Encryption.
   Input: *m* -bit key *k* ; *l*-bit IV; *l* -bit plaintext blocks *p*₁, *- - - p*r*.*
   Output: *c*₀, - - -, *cᵣ* such that c₀ ← *IV* and *c*ᵢ ← *eₖ*(*c*ᵢ₋₁ ⊕ *p*ᵢ) for 1 ≤ *i* ≤ *r.*
Decryption.
   Input: *m* -bit key *k* ; *l*-bit IV; *l*-bit ciphertext blocks *c*₁, --- *cᵣ.*
   Output: *p₀, ---, pᵣ such that p₀ ← IV and pᵢ* ← *cᵢ₋₁* ⊕ *eₖ⁻¹*(*cᵢ*) for 1 ≤ *i ≤* r.

The values c₀, ..., cᵣ above are the message authentication codes (MAC) of the data stream p₁, ..., pᵣ. IV is the initiation vector, and k is a key. Thus, when it is desirable to write blocks of data p₁, ..., pᵣ to memory 20, the MAC values (e.g. c₀, ..., cᵣ) are calculated from the blocks of data by the Crypto-engine 40 in system 10 using a hash function such as the CBC function above, and an associated security configuration record comprising the MAC values, IV and the key k and other parameters described above is written to memory 20 along with the data itself is written to memory 20. In the above formulae, eₖ (x) means a process where x is encrypted by means of key k and *eₖ⁻¹*(x) means x is decrypted using the key k.

When the data blocks p₁, ..., pᵣ are later read from memory 20, the associated security configuration record is read as well, and the Crypto-engine 40 computes the set of MAC values from IV, the key k in the security configuration record and the data read and compares such set of values to the set of MAC values read from the memory 20. If there is a difference between the two sets of MAC values, the data read may have been altered or otherwise corrupted. For some hash functions such as the CBC function above, except for the first value in the sequence, each of the MAC value is derived from a prior MAC value. This means that the set of MAC values, in such circumstances, are derived sequentially in time.

It may be desirable for multiple applications in the host device 24 to be able to access memory 20 in parallel, so that the user does not have to wait for one application using the memory 20 to be completed before using another application to access memory 20. This may mean, for example, that not all the blocks of data p₁, ..., pᵣ will have been read from memory 20 when the reading process is interrupted, so that the memory system (e.g. system 10 of Figs. 1 and 2) can be used to serve another different application running at device 24. In such circumstance, however, the above process of calculating MAC values may be interrupted before the entire data stream has been read and before all of the MAC values have been calculated. Hence, when the memory system resumes the reading of the unread blocks among the data p₁, ..., pᵣ, the previously calculated incomplete set of MAC values may have been lost, so that it becomes impossibly to calculate the remaining MAC values, since their calculation depends on the previously calculated MAC values. Thus, another aspect of the invention is based on the feature that the previously calculated incomplete set of MAC values is stored, such as in the CPU RAM 12a in Fig. 1, along with the remaining values in the security configuration record (e.g. IV, key k, data source and destination, algorithm). Hence, when the memory system resumes the reading of unread blocks among data p₁, ..., pᵣ, the previously calculated incomplete set of MAC values is still available, so that it is possible to calculate the remaining MAC values.

At the end of the read session at block 242 after an end of session command is detected from the host 24, the CPU compares the MAC values calculated from the data read from memory 20 to the MAC values stored in memory 20 to validate the data read. If the host command received is none of the ones indicated above, the CPU 12 simply executes the command and returns to block 202 (block 250).

While the invention has been described above by reference to various embodiments, it will be understood that changes and modifications may be made without departing from the scope of the invention, which is to be defined only by the appended claims.

## Claims

1. A method for encrypting and/or decrypting data in non-volatile memory (20) in a storage device (10) having a controller (12) and a cryptographic circuit (40), the method comprising:
the cryptographic circuit (40) performing:
receiving information from the controller (12) used to configure the cryptographic circuit (40) for performing cryptographic processes on data in a data stream from or to the non-volatile memory (20) in the storage device (10) using one or more cryptographic algorithms selected from a plurality of algorithms, wherein the information is information on the cryptographic algorithm and key to be employed in cryptographically processing the data; and
cryptographically processing the data in the data stream independent of involvement of the controller (12) according the algorithms to be employed after the cryptographic circuit (40) is configured.

2. The method of claim 1, wherein data is written or read from the non-volatile memory (20) in pages, wherein the cryptographic circuit (40) cryptographically processes the data on units each smaller than a page, and wherein the information received from the controller (12) is used to configure the cryptographic circuit (40) to perform cryptographic processes on multiple pages of data without involving the controller (12) after the cryptographic circuit (40) is configured.

3. The method of claim 1 or claim 2, wherein the information received from the controller (12) is used to configure the cryptographic circuit (40) to select a source of the data stream from a plurality of sources and to select a destination of the data stream from a plurality of destinations.

4. The method of claim 3, wherein the information received from the controller (12) is used to configure the cryptographic circuit (40) to select the non-volatile memory (20) as the source of the data stream and to select the controller (12) or a host device (24) as the destination of the data stream.

5. The method of claim 3 or claim 4, wherein the information received from the controller (12) is used to configure the cryptographic circuit (40) to select the non-volatile memory (20) as the destination of the data stream and to select the controller (12) or a host device (24) as the source of the data stream.

6. The method of any of claims 3 to 5, wherein the information received from the controller (12) is used to configure the cryptographic circuit (40) to operate in a bypass mode so that the data stream from the non-volatile memory (20) to a host device (24) or to the non-volatile memory (20) from the host device (24) bypasses the cryptographic circuit (40).

7. The method of any previous claim, wherein the information received from the controller (12) is used to configure the cryptographic circuit (40) so that the cryptographic circuit (40) cryptographically processes data in the data stream in multiple successive stages without involvement of the controller (12) after the configuration.

8. The method of claim 7, wherein the information received from the controller (12) is used to configure the cryptographic circuit (40) so that the cryptographic circuit (40) cryptographically processes data in the data stream in multiple successive stages using more than one key without involvement of the controller (12) after the configuration.

9. The method of claim 7 or claim 8, wherein the information received from the controller (12) is used to configure the cryptographic circuit (40) so that the cryptographic circuit (40) cryptographically processes data in the data stream in multiple successive stages using more than one cryptographic process without involvement of the controller (12) after the configuration.

10. The method of any previous claim further comprising:
selecting a source of the data stream from a plurality of sources and selecting a destination of the data stream from a plurality of destinations, wherein the source and destination are selected without involving the controller (12); and
cryptographic processing one or more pages of data in the data stream using the cryptographic circuit (40) without involving the controller (12), wherein data is written or read in pages, and wherein the cryptographic circuit (40) performs cryptographic processes on units of data each smaller than a page.

11. A storage device comprising:
non-volatile memory (20);
a controller (12); and
a cryptographic circuit (40) configured to:
receive information from the controller (12) used to configure the cryptographic circuit (40) for performing cryptographic processes on data in a data stream from or to the non-volatile memory (20) in the storage device (10) using one or more cryptographic algorithms selected from a plurality of algorithms, wherein the information is information on the cryptographic algorithm and key to be employed in cryptographically processing the data; and
cryptographically process the data in the data stream independent of involvement of the controller (12) according the algorithms to be employed after the cryptographic circuit (40) is configured.

12. The storage device of claim 11, wherein data is written or read from the non-volatile memory (20) in pages, wherein the cryptographic circuit (40) cryptographically processes the data on units each smaller than a page, and wherein the information received from the controller (12) is used to configure the cryptographic circuit (40) to perform cryptographic processes on multiple pages of data without involving the controller (12) after the cryptographic circuit (40) is configured.

13. The storage device of claim 11 or claim 12, wherein the information received from the controller (12) is used to configure the cryptographic circuit (40) to select a source of the data stream from a plurality of sources and to select a destination of the data stream from a plurality of destinations.

14. The storage device of claim 13, wherein the information received from the controller (12) is used to configure the cryptographic circuit (40) to select the non-volatile memory (20) as the source of the data stream and to select the controller (12) or a host device (24) as the destination of the data stream

15. The storage device of claim 13 or claim 14, wherein the information received from the controller (12) is used to configure the cryptographic circuit (40) to select the non-volatile memory (20) as the destination of the data stream and to select the controller (12) or a host device (24) as the source of the data stream.

16. The storage device of any of claims 13 to 15, wherein the information received from the controller (12) is used to configure the cryptographic circuit (40) to operate in a bypass mode so that the data stream from the non-volatile memory (20) to a host device (24) or to the non-volatile memory (20) from the host device (24) bypasses the cryptographic circuit (40).

17. The storage device according to any of claims 11 to 16, wherein the information received from the controller (12) is used to configure the cryptographic circuit (40) so that the cryptographic circuit (40) cryptographically processes data in the data stream in multiple successive stages without involvement of the controller (12) after the configuration.

18. The storage device of claim 17, wherein the information received from the controller (12) is used to configure the cryptographic circuit (40) so that the cryptographic circuit (40) cryptographically processes data in the data stream in multiple successive stages using more than one key without involvement of the controller (12) after the configuration.

19. The storage device of claim 17 or claim 18, wherein the information received from the controller (12) is used to configure the cryptographic circuit (40) so that the cryptographic circuit (40) cryptographically processes data in the data stream in multiple successive stages using more than one cryptographic process without involvement of the controller (12) after the configuration.

20. The storage device according to any of claims 11 to 19, wherein the cryptographic circuit (40) is further configured to:
select a source of the data stream from a plurality of sources and selecting a destination of the data stream from a plurality of destinations, wherein the source and destination are selected without involving the controller (12); and
cryptographic processes one or more pages of data in the data stream using the cryptographic circuit (40) without involving the controller (12), wherein data is written or read in pages, and wherein the cryptographic circuit (40) performs cryptographic processes on units of data each smaller than a page.

## Patentansprüche

1. Verfahren zum Verschlüsseln und/oder Entschlüsseln von Daten in einem nichtflüchtigen Speicher (20) in einer Speichereinrichtung (10) mit einem Controller (12) und einer kryptografischen Schaltung (40), wobei das Verfahren umfaßt:
die kryptografische Schaltung (40) die Folgendes ausführt:
Empfangen von Information vom Controller (12), die zum Konfigurierten der kryptografischen Schaltung (40) verwendet wird, um kryptografische Prozesse auf Daten in einem Datenstrom vom oder zum nichtflüchtigen Speicher (20) in der Speichereinrichtung (10) unter Verwendung von einem oder mehreren kryptografischen Algorithmen auszuführen, die aus einer Vielzahl von Algorithmen ausgewählt werden, worin die Information Information über den kryptografischen Algorithmus und den Schlüssel ist, die im kryptografischen Verarbeiten der Daten zu verwenden sind; und
kryptografisches Verarbeiten der Daten im Datenstrom, unabhängig von der Beteiligung des Controllers (12) gemäß den Algorithmen, die einzusetzen sind, nachdem die kzyptografische Schaltung (40) konfiguriert wurde.

2. Verfahren nach Anspruch 1, worin Daten vom nichtflüchtigen Speicher (20) in Seiten geschrieben oder gelesen werden, worin die kryptografische Schaltung (40) die Daten auf Einheiten kryptografisch verarbeitet, deren jede kleiner als eine Seite ist, und worin die vom Controller (12) empfangene Information dazu verwendet wird, die kryptografische Schaltung (40) dazu zu konfigurieren, kryptografische Prozesse auf Mehrfachseiten von Daten ohne Beteiligung des Controllers (12) auszuführen, nachdem die kryptografische Schaltung (40) konfiguriert wurde.

3. Verfahren nach Anspruch 1 oder Anspruch 2, worin die vom Controller (12) empfangene Information dazu verwendet wird, die kryptografische Schaltung (40) dazu zu konfigurieren, eine Quelle des Datenstrom aus einer Vielzahl von Quellen auszuwählen und ein Ziel des Datenstroms aus einer Vielzahl von Zielen auszuwählen.

4. Verfahren nach Anspruch 3, worin die vom Controller (12) empfangene Information dazu verwendet wird, die kryptografische Schaltung (40) dazu zu konfigurieren, den nichtflüchtigen Speicher (20) als die Quelle des Datenstroms auszuwählen und den Kontroller (12) oder eine Host-Einrichtung (24) als das Ziel des Datenstroms auszuwählen.

5. Verfahren nach Anspruch 3 oder Anspruch 4, worin die vom Controller (12) empfangene Information dazu verwendet wird, die kryptografische Schaltung (40) dazu zu konfigurieren, den nichtflüchtigen Speicher (20) als das Ziel des Datenstroms auszuwählen und den Controller (12) oder eine Host-Einrichtung (24) als die Quelle des Datenstroms auszuwählen.

6. Verfahren nach einem der Ansprüche 3 bis 5, worin die vom Controller (12) empfangene Information dazu verwendet wird, die kryptografische Schaltung (40) dazu zu konfigurierten, in einem Umleitungsmodus zu arbeiten, sodass der Datenstrom vom nichtflüchtigen Speicher (20) zu einer Host-Einrichtung (24) oder zum nichtflüchtigen Speicher (20) von der Host-Einrichtung (24) die kryptografische Schaltung (40) umgeht.

7. Verfahren nach einem vorhergehenden Anspruch, worin die vom Controller (12) empfangene Information dazu verwendet wird, die kryptografische Schaltung (40) so zu konfigurieren, dass die kryptografische Schaltung (40) Daten im Datenstrom in mehreren aufeinanderfolgenden Stufen ohne Beteiligung des Controllers (12) nach der Konfiguration kryptografisch verarbeitet.

8. Verfahren nach Anspruch 7, worin die vom Controller (12) empfangene Information dazu verwendet wird, die kryptografisehe Schaltung (40) so zu konfigurieren, dass die kryptografische Schaltung (40) Daten im Datenstrom in mehreren aufeinanderfolgenden Stufen unter Verwendung von mehr als einem Schlüssel ohne Beteiligung des Controllers (12) nach der Konfiguzation kryptografisch verarbeitet.

9. Verfahren nach Anspruch 7 oder Anspruch 8, worin die vom Controller (12) empfangene Information dazu verwendet wird, die kryptografische Schaltung (40) so zu konfigurierten, dass die kryptografische Schaltung (40) Daten im Datenstrom in mehreren aufeinanderfolgenden Stufen unter Verwendung von mehr als einen kryptografischen Prozess ohne Beteiligung des Controllers (12) nach der Konfiguration kryptografisch verarbeitet.

10. Verfahren nach einem vorhergehenden Anspruch, außerdem umfassend:
Auswählen einer Quelle des Datenstroms aus einer Vielzahl von Quellen und Auswählen eines Ziels des Datenstroms aus einer Vielzahl von Zielen, worin die Quelle und das Ziel ohne Beteiligung des Controllers (12) ausgewählt werden; und
kryptografisches Verarbeiten von einer oder mehreren Seiten von Daten im Datenstrom unter Verwendung der kryptografischen Schaltung (40) ohne Beteiligung des Controllers (12), worin Daten in Seiten geschrieben oder gelesen werden und worin die kryptografische Schaltung (40) kryptografische Prozesse auf Dateneinheiten ausführt, von denen jede kleiner als eine Seite ist.

11. Speichereinrichtung, Folgendes umfassend:
einen nichtflüchtigen Speicher (20);
einen Controller (12); und
eine kryptografische Schaltung (40), konfiguriert zum.
Empfangen von Information vom Controller (12), die zum Konfigurieren der kryptografischen Schaltung (40) verwendet wird, um kryptografische Prozesse auf Daten in einem Datenstrom vom oder zum nichtflüchtigen Speicher (20) in der Speichereinrichtung (10) unter Verwendung von einem oder mehreren kryptografischen Algorithmen auszuführen, die aus einer Vielzahl von Algorithmen ausgewählt werden, worin die Information Information über den kryptografischen Algorithmus und den Schlüssel ist, die im kryptografischen Verarbeiten der Daten zu verwenden sind; und
kryptografisches Verarbeiten der Daten im Datenstrom, unabhängig von der Beteiligung des Controllers (12) gemäß den Algorithmen, die einzusetzen sind, nachdem die kryptografische Schaltung (40) konfiguriert wurde.

12. Speichereinrichtung nach Anspruch 11, worin Daten vom nichtflüchtigen Speicher (20) in Seiten geschrieben oder gelesen werden, worin die kryptografische Schaltung (40) die Daten auf Einheiten kryptografisch verarbeitet, von denen jede kleiner als eine Seite ist, und worin die vom Controller (12) empfangene Information dazu verwendet wird, die kryptografische Schaltung (40) dazu zu konfigurieren, kryptografische Prozesse auf Mehrfachseiten von Daten ohne Beteiligung des Controllers (12) auszuführen, nachdem die kryptografische Schaltung (40) konfiguriert wurde.

13. Speichereinrichtung nach Anspruch 11 oder Anspruch 12, worin die vom Controller (12) empfangene Information dazu verwendet wird, die kryptografische Schaltung (40) dazu zu konfigurieren, eine Quelle des Datenstroms aus einer Vielzahl von Quellen auszuwählen und ein Ziel des Datenstroms aus einer Vielzahl von Zielen auszuwählen.

14. Speichereinrichtung nach Anspruch 13, worin die vom Controller (12) empfangene Information dazu verwendet wird, die kryptografische Schaltung (40) dazu zu konfigurieren, den nichtflüchtigen Speicher (20) als die Quelle des Datenstroms auszuwählen und den Controller (12) oder eine Host-Einrichtung (24) als das Ziel des Datenstroms auszuwählen.

15. Speichereinrichtung nach Anspruch 13 oder Anspruch 14, worin die vom Controller (12) empfangene Information dazu verwendet wird, die kryptografische Schaltung (40) dazu zu konfigurieren, den nichtflüchtigen Speicher (20) als das Ziel des Datenstroms auszuwählen und den Controller (12) oder eine Host-Einrichtung (24) als die Quelle des Datenstroms auszuwählen.

16. Speichereinrichtung nach einem der Ansprüche 13 bis 15, worin die vom Controller (12) empfangene Information dazu verwendet wird, die kryptografische Schaltung (40) dazu zu konfigurieren, in einem Umleitungsmodus zu arbeiten, sodass der Datenstrom vom nichtflüchtigen Speicher (20) zu einer Host-Einrichtung (24) oder zum nichtflüchtigen Speicher (20) von der Host-Einrichtung (24) die kryptografische Schaltung (40) umgeht.

17. Speichereinrichtung nach einem der Ansprüche 11 bis 16, worin die vom Controller (12) empfangene Information dazu verwendet wird, die kryptografische Schaltung (40) so zu konfigurieren, dass die kryptografische Schaltung (40) Daten im Datenstrom in mehreren aufeinanderfolgenden Stufen ohne Beteiligung des Controllers (12) nach der Konfiguration kryptografisch verarbeitet.

18. Speichereinrichtung nach Anspruch 17, worin die vom Controller (12) empfangene Information dazu verwendet wird, die kryptografische Schaltung (40) so zu konfigurieren, dass die kryptografische Schaltung (40) Daten im Datenstrom in mehreren aufeinanderfolgenden Stufen unter Verwendung von mehr als einem Schlüssel ohne Beteiligung des Controllers (12) nach der Konfiguration kryptografisch verarbeitet.

19. Speichereinrichtung nach Anspruch 17 oder Anspruch 18, worin die vom Controller (12) empfangene Information dazu verwendet wird, die kryptografische Schaltung (40) so zu konfigurieren, dass die kryptografische Schaltung (40) Daten im Datenstrom in mehreren aufeinanderfolgenden Stufen unter Verwendung von mehr als einem kryptografischen Prozess ohne Beteiligung des Controllers (12) nach der Konfiguration kryptografisch verarbeitet.

20. Speichereinrichtung nach einem der Ansprüche 11 bis 19, worin die kryptografische Schaltung (40) außerdem konfiguriert ist zum:
Auswählen einer Quelle des Datenstroms aus einer Vielzahl von Quellen und Auswählen eines Ziels des Datenstroms aus einer Vielzahl von Zielen, worin die Quelle und das Ziel ohne Beteiligung des Controllers (12) ausgewählt werden; und
kryptografisches Verarbeiten von einer oder mehreren Seiten von Daten im Datenstrom unter Verwendung der kryptografischen Schaltung (40) ohne Beteiligung des Controllers (12), worin Daten in Seiten geschrieben oder gelesen werden und worin die kryptografische Schaltung (40) kryptografische Prozesse auf Dateneinheiten ausführt, von denen jede kleiner als eine Seite ist.

## Revendications

1. Procédé destiné à chiffrer et/ou déchiffrer des données dans une mémoire non volatile (20) au sein d'un dispositif de stockage (10) présentant un contrôleur (12) et un circuit de chiffrement (40), le procédé comprenant :
la mise en oeuvre, par le circuit de chiffrement (40), de :
la réception d'informations en provenance du contrôleur (12), utilisées en vue de configurer le circuit de chiffrement (40) afin qu'il mette en oeuvre des processus de chiffrement sur les données dans un flux de données en provenance ou à destination de la mémoire non volatile (20) au sein du dispositif de stockage (10), en utilisant un ou plusieurs algorithme de chiffrement choisis parmi une pluralité d'algorithmes, dans lequel les informations sont des informations sur l'algorithme de chiffrement et sur la clé à utiliser dans le processus de chiffrement des données ; et
le processus de chiffrement des données dans le flux de données, indépendamment de l'implication du contrôleur (12), selon les algorithmes à utiliser après que le circuit de chiffrement (40) a été configuré.

2. Procédé selon la revendication 1, dans lequel les données sont écrites ou lues à partir de la mémoire non volatile (20) dans des pages, dans lequel le circuit de chiffrement (40) traite par chiffrement les données sur des unités qui sont toutes plus petites qu'une page, et dans lequel les informations reçues à partir du contrôleur (12) sont utilisées en vue de configurer le circuit de chiffrement (40) afin qu'il mette en oeuvre des processus de chiffrement sur de multiples pages de données, sans impliquer le contrôleur (12), après que le circuit de chiffrement (40) a été configuré.

3. Procédé selon la revendication 1 ou 2, dans lequel les informations reçues à partir du contrôleur (12) sont utilisées en vue de configurer le circuit de chiffrement (40) afin qu'il sélectionne une source du flux de données parmi une pluralité de sources, et qu'il sélectionne une destination du flux de données parmi une pluralité de destinations.

4. Procédé selon la revendication 3, dans lequel les informations reçues à partir du contrôleur (12) sont utilisées en vue de configurer le circuit de chiffrement (40) afin qu'il sélectionne la mémoire non volatile (20) en tant que source du flux de données et qu'il sélectionne le contrôleur (12) ou un dispositif hôte (24) en tant que destination du flux de données.

5. Procédé selon la revendication 3 ou 4, dans lequel les informations reçues à partir du contrôleur (12) sont utilisées en vue de configurer le circuit de chiffrement (40) afin qu'il sélectionne la mémoire non volatile (20) en tant que destination du flux de données et qu'il sélectionne le contrôleur (12) ou un dispositif hôte (24) en tant que source du flux de données.

6. Procédé selon l'une quelconque des revendications 3 à 5, dans lequel les informations reçues à partir du contrôleur (12) sont utilisées en vue de configurer le circuit de chiffrement (40) afin qu'il fonctionne dans un mode de contournement, de sorte que le flux de données en provenance de la mémoire non volatile (20) à destination d'un dispositif hôte (24), ou à destination de la mémoire non volatile (20) en provenance du dispositif hôte (24), contourne le circuit de chiffrement (40).

7. Procédé selon l'une quelconque des revendications précédentes, dans lequel les informations reçues à partir du contrôleur (12) sont utilisées en vue de configurer le circuit de chiffrement (40) de sorte que le circuit de chiffrement (40) traite par chiffrement les données dans le flux de données dans de multiples étages successifs, sans implication du contrôleur (12), à l'issue de la configuration.

8. Procédé selon la revendication 7, dans lequel les informations reçues à partir du contrôleur (12) sont utilisées en vue de configure le circuit de chiffrement (40) de sorte que le circuit de chiffrement (40) traite par chiffrement les données dans le flux de données dans de multiples étages successifs, en utilisant plus d'une clé, sans implication du contrôleur (12), à l'issue de la configuration.

9. Procédé selon la revendication 7 ou 8, dans lequel les informations reçues à partir du contrôleur (12) sont utilisées en vue de configurer le circuit de chiffrement (40) de sorte que le circuit de chiffrement (40) traite par chiffrement les données dans le flux de données dans de multiples étages successifs, en utilisant plus d'un processus de chiffrement, sans implication du contrôleur (12), à l'issue de la configuration.

10. Procédé selon l'une quelconque des revendications précédentes, comprenant en outre :
la sélection d'une source du flux de données parmi une pluralité de sources et la sélection d'une destination du flux de données parmi une pluralité de destinations, dans lequel la source et la destination sont sélectionnées sans impliquer le contrôleur (12) ; et
le processus de chiffrement d'une ou plusieurs pages de données dans le flux de données, en utilisant le circuit de chiffrement (40), sans impliquer le contrôleur (12), dans lequel des données sont écrites ou lues dans des pages, et dans lequel le circuit de chiffrement (40) met en oeuvre des processus de chiffrement sur des unités de données qui sont toutes plus petites qu'une page.

11. Dispositif de stockage comprenant :
une mémoire non volatile (20) ;
un contrôleur (12) ; et
un circuit de chiffrement (40) configuré de manière à :
recevoir des informations en provenance du contrôleur (12), utilisées en vue de configurer le circuit de chiffrement (40) afin qu'il mette en oeuvre des processus de chiffrement sur les données dans un flux de données en provenance ou à destination de la mémoire non volatile (20) au sein du dispositif de stockage (10), en utilisant un ou plusieurs algorithmes de chiffrement choisis parmi une pluralité d'algorithmes, dans lequel les informations sont des informations sur l'algorithme de chiffrement et sur la clé à utiliser dans le processus de chiffrement des données ; et
traiter par chiffrement les données dans le flux de données, indépendamment de l'implication du contrôleur (12), selon les algorithmes à utiliser après que le circuit de chiffrement (40) a été configuré.

12. Dispositif de stockage selon la revendication 11, dans lequel les données sont écrites ou lues à partir de la mémoire non volatile (20) dans des pages, dans lequel le circuit de chiffrement (40) traite par chiffrement les données sur des unités qui sont toutes plus petites qu'une page, et dans lequel les informatisons reçues à partir du contrôleur (12) sont utilisées en vue de configurer le circuit de chiffrement (40) afin qu'il mette en oeuvre des processus de chiffrement sur de multiples pages de données, sans impliquer le contrôleur (12), après que le circuit de chiffrement (40) a été configuré.

13. Dispositif de stockage selon la revendication 11 ou 12, dans lequel les informations reçues à partir du contrôleur (12) sont utilisées en vue de configurer le circuit de chiffrement (40) afin qu'il sélectionne une source du flux de données parmi une pluralité de sources, et qu'il sélectionne une destination du flux de données parmi une pluralité de destinations.

14. Dispositif de stockage selon la revendication 13, dans lequel les informations reçues à partir du contrôleur (12) sont utilisées en vue de configurer le circuit de chiffrement (40) afin qu'il sélectionne la mémoire non volatile (20) en tant que source du flux de données et qu'il sélectionne le contrôleur (12) ou un dispositif hôte (24) en tant que destination du flux de données.

15. Dispositif de stockage selon la revendication 13 ou 14, dans lequel les informations reçues à partir du contrôleur (12) sont utilisées en vue de configurer le circuit de chiffrement (40) afin qu'il sélectionne la mémoire non volatile (20) en tant que destination du flux de données et qu'il sélectionne le contrôleur (12) ou un dispositif hôte (24) en tant que source du flux de données.

16. Dispositif de stockage selon l'une quelconque des revendications 13 à 15, dans lequel les informations reçues à partir du contrôleur (12) sont utilisées en vue de configurer le circuit de chiffrement (40) afin qu'il fonctionne dans un mode de contournement, de sorte que le flux de données en provenance de la mémoire non volatile (20) à destination d'un dispositif hôte (24), ou à destination de la mémoire non volatile (20) en provenance du dispositif hôte (24), contourne le circuit de chiffrement (40).

17. Dispositif de stockage selon l'une quelconque des revendications 11 à 16, dans lequel les informations reçues à partir du contrôleur (12) sont utilisées en vue de configurer le circuit de chiffrement (40) de sorte que le circuit de chiffrement (40) traite par chiffrement les données dans le flux de données dans de multiples étages successifs, sans implication du contrôleur (12), à l'issue de la configuration.

18. Dispositif de stockage selon la revendication 17, dans lequel les informatisons reçues à partir du contrôleur (12) sont utilisées en vue de configurer le circuit de chiffrement (40) de sorte que le circuit de chiffrement (40) traite par chiffrement les données dans le flux de données dans de multiples étages successifs, en utilisant plus d'une clé, sans implication du contrôleur (12), à l'issue de la configuration.

19. Dispositif de stockage selon la revendication 17 ou 18, dans lequel les informations reçues à partir du contrôleur (12) sont utilisées en vue de configurer le circuit de chiffrement (40) de sorte que le circuit de chiffrement (40) traite par chiffrement les données dans le flux de données dans de multiples étages successifs, en utilisant plus d'un processus de chiffrement, sans implication du contrôleur (12), à l'issue de la configuration.

20. Dispositif de stockage selon l'une quelconque des revendications 11 à 19, dans lequel le circuit de chiffrement (40) est en outre configure de manière à :
sélectionner une source du flux de données parmi une pluralité de sources et sélectionner une destination du flux de données parmi une pluralité de destinations, dans lequel la source et la destination sont sélectionnées sans impliquer le contrôleur (12) ; et
traiter par chiffrement une ou plusieurs pages de données dans le flux de données, en utilisant le circuit de chiffrement (40), sans impliquer le contrôleur (12), dans lequel des données sont écrites ou lues dans des pages, et dans lequel le circuit de chiffrement (40) met en oeuvre des processus de chiffrement sur des unités de données qui sont toutes plus petites qu'une page.
